# EUROPEAN PATENT SPECIFICATION

(11) **EP 0 984 387 B1**
(45) Date of publication and mention of the grant of the patent: **17.08.2005**
(21) Application number: 99480039.9
(22) Date of filing: 31.05.1999
(51) Int. Cl.: G06K 9/20, G06K 9/62

(54) **Distinguishing between similar forms**
Unterscheidung zwischen Formularen
Distinction entre des formulaires

(30) Priority: 31.08.1998 EP 98480060
(43) Date of publication of application: 08.03.2000
(73) Proprietor: INTERNATIONAL BUSINESS MACHINES CORPORATION, Armonk, NY 10504 (US)
(72) Inventor: Zlotnick, Aviad, D.N.G.T. 15295 (IL)
(74) Representative: de Pena, Alain

(56) References cited:
- EP-A- 0 616 296
- US-A- 4 805 224
- US-A- 5 293 429
- US-A- 5 642 288
- PATENT ABSTRACTS OF JAPAN vol. 015, no. 268 (P-1224), 8 July 1991 (1991-07-08) & JP 03 087972 A (OKI ELECTRIC IND CO LTD), 12 April 1991 (1991-04-12)
- MATSUNAGA T ET AL: "A study of document format identification based on table structure" NTT DATA COMMUNICATIONS SYSTEMS CORPORATION, DEVELOPMENT HEADQUARTERS, IEEE, XP010091560

## Description

### FIELD OF THE INVENTION:

The present invention is in the general field of automatic processing of forms and relates, more specifically, to distinguishing between similar forms, and classifying an input form as one out of few possible similar forms.

### BACKGROUND OF THE INVENTION:

With the development of advanced image processing technologies, image processing applications have been introduced including automatic processing of forms. The latter application is useful e.g. for mass processing of application forms in various organizations such as post offices, telephone companies and others. An exemplary form processing application is the IFP system, commercially available from IBM Corp. USA . Automatic form processing of the kind specified carries the obvious advantage that manual processing may be completely or partially eliminated thereby not only expediting the processing rate but also lowering costs by reducing manpower.

In a typical form processing application, it is necessary to store, in advance, templates of similar blank forms (constituting a list of candidate forms).
When an already filled-in form is fed to the application for processing, it is necessary to identify the correct candidate blank form in the list and to "subtract" it from the filled form thereby obtaining the filled-in data that are then used for further processing. Ideally, the list of candidate forms has exactly one member in which case the only member obviously corresponds to the input filled-in form. However, in many real life scenarios, the list of candidates may exceed, say 20 members thus hindering the assignment of an input form to the correct candidate.

There is, accordingly, a need in the art for a processing technique, capable of minimizing the list of potential form candidates, preferably to only one. There is a further need in the art for a training technique which automatically identifies the distinctive features of a blank form, *vis-a-vis* other similar forms and stores them in a database for future form processing purposes.

The European patent application EP 0 616 296 filed on 28.02.94 discloses a method for processing documents which comprises a first step of identifying the blank form corresponding to the document by extracting some graphical features located at a defined location in the image of the document. Once the blank form is determined, the filled in fields are read by the use of an image processing program. This solution applies to forms including graphical features at determined locations allowing to distinguish between each other. However, there is a need for a training technique which automatically identifies the distinctive features of a blank form without knowing them in advance.

The patent abstract of Japan published under the number 03087972 on 12.01.91 discloses a method to automatically recognize between forms which have been made distinguishable by a sheet ID, such as a bar code, read on a determined location of the sheet image. There is still a need for a training technique which automatically identifies the distinctive features when none is precisely defined such as the sheet ID.

### SUMMARY OF THE INVENTION:

According to the invention there is provided a method as claimed in claims 1 to 8 and particularly the method of claim 1 for classifying an input form as corresponding to a candidate blank form from among a set of candidate blank forms, the method comprising the steps of:
**(a)** for each ordered couple taken in the set of candidate blank forms, form A and form B, finding at least one property which may distinguish between form A and form B by executing the steps of:
   (i) comparing form A and form B so as to find at least one property in form A which is sufficiently distinguishable from a corresponding property in form B and which complies at least with a criterion that relates to the likelihood that the property is retained substantially invariable under use of the form A, said at least one property distinguishing between form A and form B constituting a verification property;
   (ii) in the case where no property is found in step (i), comparing form A and form B so as to find at least one property in form A which is sufficiently distinguishable from a corresponding property in form B and which complies at least with a criterion that relates to the likelihood that the property is retained substantially invariable under use of the form B; said at least one property distinguishing between form A and form B constituting a rejection property;
**(b)** storing the verification property and/or the rejection property associated to form A, if any, which have been found in the preceding step **(a);**
**(c)** for each form of the set of candidate blank forms, repeating the sequence of following steps:
   **(1)** retrieving the properties associated with that candidate blank form and stored in the preceding step (b),
   **(2)** for each of the properties retrieved in the preceding step (1), repeating the following steps: (I) computing the respective property in the input form, (II) comparing the computed property with the retrieved property, (III) in the case that a verification property substantially mismatches a corresponding property in the input form, rejecting said candidate blank form, (IV) in the case that a rejection property substantially matches a corresponding property in the input form, rejecting said candidate blank form;
   **(3)** if said candidate blank form has not been rejected in the preceding step, classifying said input form as acorresponding to said candidate blank form.

Still further the invention provides the method of claim 1 being characterized in that
Step (i) comprises the steps of
- defining at least one box in the image of form B, each box constituting a sub-image in said form B image that corresponds to an area in form A image, said at least one box consituting an at least one property,
- ranking the boxes so as to give rise to respective box rank scores, the likelihood that the area in the blank form B is a fill-in area being used as a first criterion for box ranking; high score reflecting better compliance with the criterion;
Said method being further characterized in that
Step (ii) comprises the steps of
- defining at least one box in the image of form A, each box constituting a sub-image in said form A image that corresponds to an area in form B image, said at least one box consituting an at least one property.
- ranking the boxes so as to give rise to respective box rank scores, the likelihood that the area in the blank form A is a fill-in area being used as one criterion for box ranking; high score reflecting better compliance with the criterion.

Still further the invention provides a system as claimed in claim 9 for classifying an input form as corresponding to being based on a candidate blank form from among a set of candidate blank forms, said system comprising a processor and associated memory capable of:
**(a)** for each ordered couple taken in the set of candidate blank forms, form A and form B, finding at least one property which may distinguish between form A and form B by executing the steps of:
   (i) comparing form A and form B so as to find at least one property in form A which is sufficiently distinguishable from a corresponding property in form B and which complies at least with a criterion that relates to the likelihood that the property is retained substantially invariable under use of the form A, said at least one property distinguishing between form A and form B constituting a verification property;
   (ii) in the case where no property is found in step (i), comparing form A and form B so as to find at least one property in form A which is sufficiently distinguishable from a corresponding property in form B and which complies at least with a criterion that relates to the likelihood that the property is retained substantially invariable under use of the form B; said at least one property distinguishing between form A and form B constituting a rejection property;
**(b)** storing the verification property and/or the rejection property associated to form A, if any, which have been found in the preceding step **(a);**
**(c)** for each form of the set of candidate blank forms, repeating the sequence of following steps:
   **(1)** retrieving the properties associated with that blank form and stored in the preceding step (b),
   **(2)** for each of the properties retrieved in the preceding step (1), repeating the following steps: (I) computing the respective property in the input form, (II) comparing the computed property with the retrieved property, (III) in the case that a verification property substantially mismatches a corresponding property in the input form, rejecting said candidate blank form, (IV) in the case that a rejection property substantially matches a corresponding property in the input form, rejecting said candidate blank form;
   **(3)** if said candidate blank form has not been rejected in the preceding step, classifying said input form as acorresponding to said candidate blank form.

Still further the invention provides a system of claim 9 wherein said computer and associated memory being further capable of:
Including in Step (i) the steps of
   - defining at least one box in the image of form B, each box constituting a sub-image in said form B image that corresponds to an area in form A image, said at least one box consituting an at least one property,
   - ranking the boxes so as to give rise to respective box rank scores, the likelihood that the area in the blank form B is a fill-in area being used as a first criterion for box ranking; high score reflecting better compliance with the criterion;
And, including step (ii) the steps of
   - defining at least one box in the image of form A, each box constituting a sub-image in said form A image that corresponds to an area in form B image, said at least one box consituting an at least one property.
   - ranking the boxes so as to give rise to respective box rank scores, the likelihood that the area in the blank form A is a fill-in area being used as one criterion for box ranking; high score reflecting better compliance with the criterion.

### BRIEF DESCRIPTION OF THE DRAWINGS:

For a better understanding, the invention will now be described, by way of example only, with reference to the accompanying drawings, in which:
**Fig. 1** is a generalized schematic illustration of a system of the invention;
**Fig. 2** is a generalized flow chart of a training process, according to one embodiment of the invention;
**Fig. 3** is a generalized flow chart of a box ranking procedure that forms part of the training process of Fig. 2, according to one embodiment of the invention;
**Fig. 4** is a generalized flow chart of a form classification process, according to one embodiment of the invention;
**Fig. 5A-B** are two similar forms that serve for exemplifying the training and classification processes as depicted in Figs. 2 and 4, respectively.

### DESCRIPTION OF SPECIFIC EMBODIMENTS:

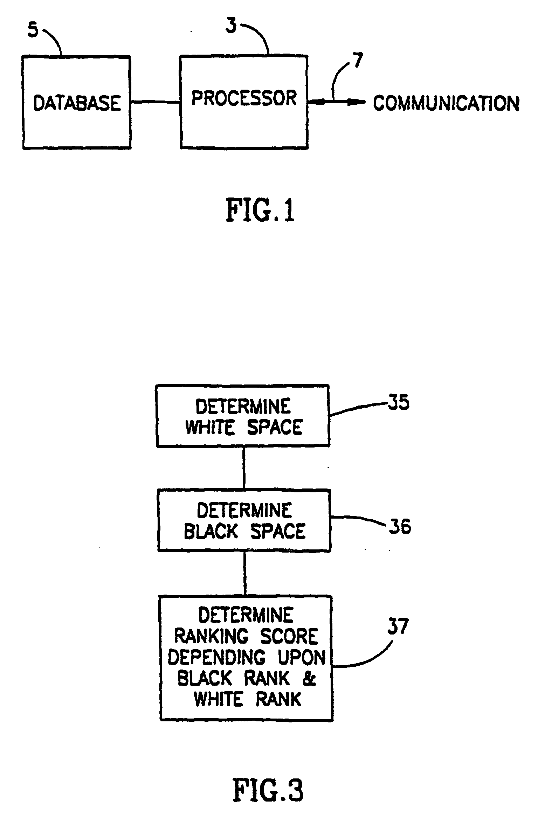

Attention is first directed to Fig. 1 showing a generalized schematic illustration of a system of the invention. As shown, system **(1)** includes a computer **(3)** being, e.g. a conventional P.C. or any other known *per se* computing device associated with a database **(5).** As will be explained in greater detail below, the database holds information that pertains to candidate blank forms including, but not limited to, so called verification boxes and rejection boxes. The database structure as well as the link to computer **(3)** are all known *per se* (and are, of course, not bound to the schematic illustration of Fig. 1) and therefore will not be further expounded upon herein.

The input blank form that has to be classified to preferably one candidate form from among those stored in database **(5)** is fed in a known *per se* manner to input **(7)** and undergoes processing in computer **(3)** in a manner described below.

The system and method of the invention operates basically in two possible modes of operation: a training mode or a form classification mode of operation.

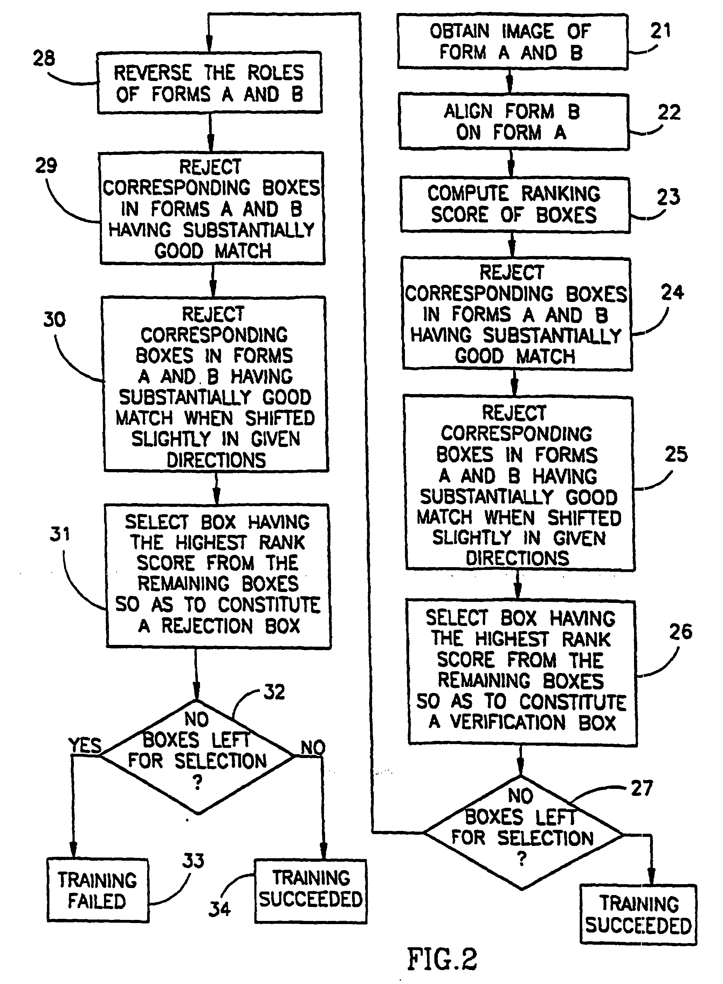

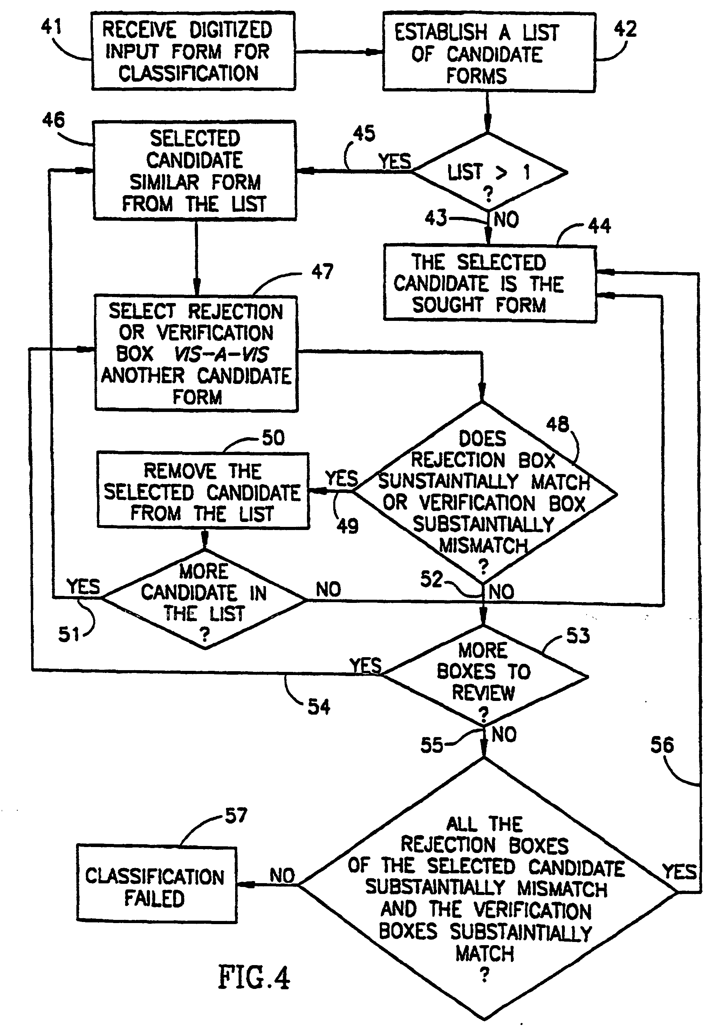

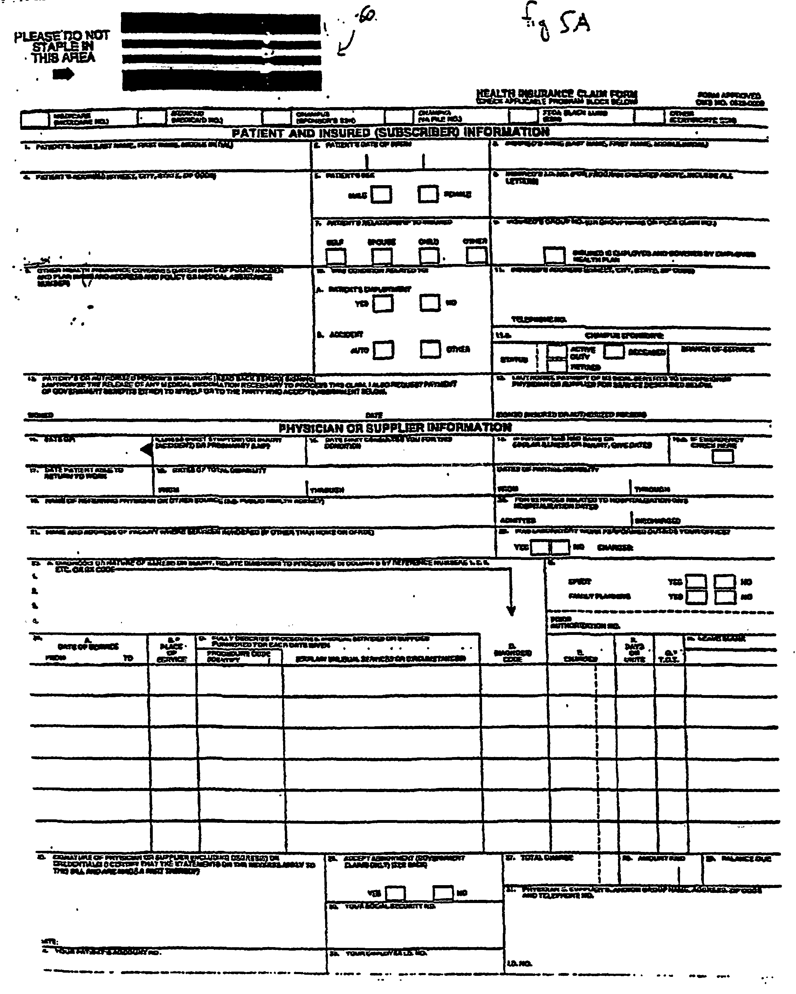

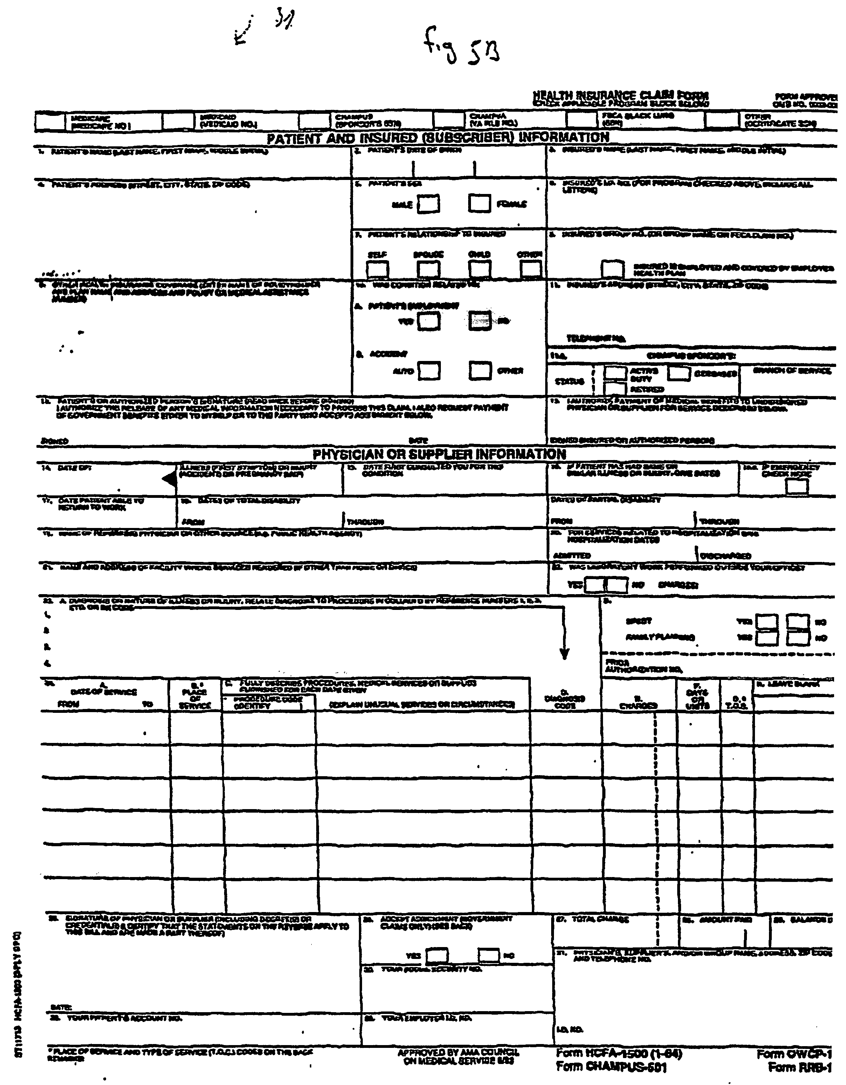

Turning at first to the training process, attention is directed to Figs. 2, 3 and to the specific examples of Figs. 5A and 5B. Thus, in a typical course of the training process, it is required to identify at least one distinguishing feature between a new blank form 3 (see e.g. the form of Fig. 5B) and an already stored blank form A (see e.g. the form of Fig. 5A) whose particulars are already stored in database **(5)**.

As a first stage, the digital image of the specified forms are obtained (**21** in Fig. 2). The digital image of form A is extracted from the database whereas that of form B is obtained by utilizing e.g. a known *per se* scanning device. The invention is, of course, not bound by the explicit representation of the images as shown in Figs. 5A and 5B and any other known *per se* representation which facilitates processing is applicable.

Having obtained the images, a known *per se* registering step is performed for substantially aligning the image of form B to form A or vice versa **(22)**, utilizing to this end known *per se* techniques, e.g. (U.K. Patent No. 9-92-036).

Before turning to the next step (box defining and ranking) it should be noted that the ranking the distinguishing property(ies) of the forms (by this particular example the property being a box that corresponds to an area in the form) is done in order to grade the likelihood that the property will remain invariable during the use of the form. By this particular example the property is to examine the likelihood that the area under question is a fill-in area (i.e. it will be changed in use due to the fact that the applicant or the receiving authority will fill it with data). Obviously, if the area is a fill-in area there is no point in using it as a distinguishing feature. By this example the likelihood that the area under question is a fill-in area is determined by calculating the white space in the box, and more specifically the number of consecutive white line in the box. Thus, large number of white lines indicates a high likelihood that the area under consideration is a fill-in area (which, as explained above is problematic for use as a distinguishing feature between forms) and a large number of black lines indicates that the area may be sensitive to scan contrast. The latter phenomenon may result in an image that does not match the corresponding area in the form from which the image originated.

Turning now to the next step, boxes in the forms B (and A) are defined and ranked **(23)**. The boxes are of a given shape say a square or rectangular. Those versed in the art will readily appreciate that the boxes may be of other geometrical shapes. By the specific example of Fig. 5B, ½" and ¼" square boxes are utilized. In other words, at first, a larger box is utilized and in the case that the training fails (as will be explained in greater detail below), another training strategy is utilized, e.g. by using a ¼" square boxes.

Naturally, the boxes associated with the forms A and B are of comparable shape.

By this particular embodiment the images of the forms are each partitioned into non-overlapping boxes but this is, of course, not obligatory.

The ranking step may be realized in numerous manners and one possible variant is illustrated in Fig. 3. As a first step, the white space in the box to be ranked is calculated **(35).** One possible heuristic function for determining the white space is to count consecutive white rows in the box where a line is considered only if there is a white space for at least 1/3 of the box width, or the total length of white spaces in the row is more than 2/3 of the box width.

Having determined the white space, the black space in the box is calculated **(36),** and the heuristic exemplary function that is used counts the number of consecutive black lines, where each line is considered if the total length of black pixels is more than 2/3 of the row width.

By this particular embodiment the rank of the box is determined **(37)** according to the results of steps **(35)** and **(36)** such that the maximum from among the number of consecutive white lines and the number of consecutive black lines constitutes the ranking score of the box.

Obviously, the larger the calculated maximum the higher the score of the box, i.e. it constitutes a "bad box" for the purpose of serving as a distinguishing feature between forms. Conversely, boxes having low score are "good boxes" with the lowest score signifying (according to one embodiment) the "best box". Preferably, boxes having an unacceptable high ranking are rejected. It should be noted that the term "high" in connection with ranking score is indicative of a "bad score" and does not necessarily reflect a nominal high score. Thus, by way of example by another embodiment a nominal low rank may be construed as high rank in the sense that it signifies a "bad box".

Reverting now to Fig. 2, after having computed the rank score of the specified box, there commences a box matching procedure **(24)** utilizing known *per se* box matching techniques. In the specified box matching procedure, a box in the input form is compared to a corresponding box in an already stored form and in the case that are insufficiently distinguished from each other (e.g. if the respective boxes correspond to identical areas in the two forms), this box of the input form is rejected since it cannot serve as a distinguishing feature between the two forms.

By this particular embodiment and as shown in step **(25),** all the remaining boxes that are insufficiently distinguishable from each other when slightly shifted in given directions (i.e. one or more direction) are also rejected. In other words, neighboring boxes (slightly shifted with respect to the box) are also compared to their corresponding boxes in the other form. The neighboring boxes may or may not partially overlap said box.

The criterion for what constitutes "sufficiently (cr insufficiently) distinguishable" is determined depending upon the particular application.

From among the remaining boxes, the box having, preferably, the best rank score is selected **(26)**, the latter box constitutes a verification box.

Turning now to the examples of Figs. 5A and 5B, they show two very similar versions of a health insurance claim form, which, as shown, differ ONLY in the top left area of the form (areas **(60)** and **(61)**, respectively). The rest of the form is completely identical in the two versions.

Thus, following steps **(21)** to **(23),** when applying step **(24)** all the boxes (being by this particular embodiment ½" by ½" or ¼" by ¼" square boxes) in the same location in forms A and B are, as expected, not sufficiently distinguishable and therefore rejected in step **(24).** The only boxes that are sufficiently distinguishable reside in the area **(61).** These boxes are, however, rejected due to a very high ranking score thereof as they have large white space (in fact the whole area is white) which signifies that there is a high likelihood that area **(61)** is a fill-in area.

The net effect is that all the boxes of form B (in 5 Fig. 5B) are rejected due to a high match characteristic or large white space. Consequently, none of the boxes corresponding to form B are identified in step **(26)** as a verification box. This result complies with the underlying concept of the invention.

For a better understanding of the foregoing, consider that form B is stored (together with other similar, yet, but identical forms) in the database **(5),** and in contrast to the stipulation of the invention, one of the boxes in the "white area" **(61)** serves as a verification box for form B (*vis-a-vis* form A). Assuming now that an input filled-in form is fed to the system for classifying it as one of the stored candidate forms. Assuming further that the permanent part of the input form (i.e. the part that constitutes the unfilled input form) is identical to form B, it is obviously required that the classifying process identifies form B (from among the rest of the stored forms) as the one that corresponds to the input form.

The utilization of a verification box of the kind specified (i.e. having a large "white space") may fail in accomplishing the desired identification. The reason is that the white area **(61)** in the form is susceptible to being filled in with data, e.g. the stamp "received" may be stamped on the white area of the top left part of the form by the receiving authority that processes the health insurance claim form or the applicant may add comments which he/she considers as important and which do not fit in any of the fields of the form etc. Thus, when the verification box of the blank form, (being, as recalled, a white space) is compared to the corresponding area in the filled-in form, the obvious result is a mismatch, and accordingly the candidate form (form B) is unduly rejected as a possible candidate despite the fact that form B is indeed the right one.

Since, according to the invention, a white space area (serving as one possible criteria for "filled-in area") is not selected as a verification box the specified ill-conceived scenario is avoided.

Reverting now to Fig. 2, since no box is selected as a verification box **(27)**, the next step **(28)** is performed, where the roles of the forms A and B are reversed.

Practically speaking, when referring to the example of Figs. 5A and 5B, the box or boxes that are deemed sufficiently distinguishable in area **(60)** in form A remain after the rest of the boxes have been rejected in steps **(29)** and **(30).** Next, in step **(31)** (and in contrast to step **(26)),** the specified remaining box or boxes are selected since they have a good score due to the fact that they have only limited white space (and not too much black space).

The box with the best ranking score (from among the remaining boxes) is selected as a rejection box. In other words, the distinguishing feature of form B *vis-a-vis* form A is selected from form A and is classified as a rejection box.

The utilization of verification and rejection boxes will be described in greater detail with reference to Fig. 4 below.

It should be noted that the invention is by no means limited to the specific steps described with reference to Fig. 2, and three out of many possible variants are listed below:
- The order of the steps may be changed, e.g. the rejections of boxes may be effected after the box ranking and matching steps **(23 - 26)** are completed.
- The matching steps may regard as "corresponding boxes" also neighboring boxes that reside in the vicinity of the box under question and possibly weigh the matching results obtained in respect of each or some neighboring box.
- More than one verification or rejection box is obtained per each couple of forms.

The specified procedure described with reference to Figs. 2 and 3 is, preferably, repeated in respect of each one of the stored candidate forms, generating for each candidate form a verification or rejection box (or boxes). Put differently, in the case that there are two other similar forms (say C and D) stored in database **(5)**, the procedure is repeated between form B and C giving rise to a verification or rejection box and again between form B and D giving rise to another verification or rejection box.

It should be noted that the specified verification/rejection boxes need not necessarily be different in respect of each stored candidate form. In other words, there may be a case where a given box serves as a verification or rejection box of an input form (e.g. form B in the latter example) *vis-a-vis* more than one form (say, the specified box serves as a verification box for form B *vis-a-vis* form A, and the same box serves as a verification box for form B *vis-a-vis* form C).

Turning now to Fig. 4, there is shown a generalized flow chart of a form classification process, according to one embodiment of the invention. Thus, in step **(41)** the digitized image of the input form (filled-in form) is received for processing. Next, a list of similar candidate forms is established **(42)**. The list may be established e.g. by running a conventional pattern recognition utilities which rejects all those candidate forms in the database which clearly differ from the input form.

The forms not rejected by the specified utility constitute the candidate list. If the candidate list contains only one member, the latter is clearly the sought form **((43)** and **(44)).** If, on the other hand, the list contains more than one member, a first candidate from the list is selected **((45)** and **(46)).**

As specified above, the candidate form is associated with a verification or rejection box *vis-a-vis* each of the other candidates. Accordingly, a first verification or rejection box (as the case may be) is selected **(47).** Next, in step **(48),** the so selected box is compared to the corresponding area of the input form, utilizing known *per se* pattern matching techniques. In the case that the selected box is a verification box and the resulting comparison gives rise to a substantially mismatch result, this clearly indicates that the candidate form doesn't correspond to the input form **(49).** By the same token, in the case that the selected box is a rejection box and the resulting comparison gives rise to a substantially match result, this clearly indicated that the candidate form doesn't correspond to the input form **(49)**. In this connection it is recalled that the rejection box associated with a given form belongs to another candidate form (e.g. rejection fox for form B in fig. 5B is taken from area **(60)** of form A - see Fig. 5A) and accordingly, if the corresponding area in the input form matches the rejection box this clearly indicates that the selected candidate doesn't correspond to the input form.

Following **(49),** the selected candidate form (that has currently been rejected) is removed from the list **(50)** and the next candidate in the list is selected **(51).** The procedure is repeated in respect of the new candidate form in the manner specified.

Reverting now to step **(48),** in the case that the comparison gives rise to a substantially mismatch (in the case of a rejection box), or a substantially match (in the case of a verification box) it is still required to show that no other candidates in the list are also valid. To this end, the rest of the candidate forms (or the verification boxes in the current form *vis-a-vis* the rest of the candidates in the list) should be checked **((53)** and **(54)).**

If all the rejection boxes of the selected candidate *vis-a-vis* the remaining candidates in the list give rise to substantially mismatch result and the verification boxes in the list *vis-a-vis* the remaining candidates in the list gives rise to substantially match result (steps **(55)** and **(56)),**this indicates that the rest of the candidates are inappropriate candidates and the selected candidate under question is the sought candidate form that corresponds to the input form. Otherwise, the classification process failed **(57)**, and possibly another classification strategy should be used (e.g. using different property).

The embodiment of Fig. 4 should by no means be regarded as binding. Accordingly, some out of many possible variants, include:
- Steps **(55)** and **(56)** are not necessarily applied to the verification or rejection boxes that are associated with the selected form under question. Thus, if a given box serves as a verification or rejection box *vis-a-vis* another candidate form (say candidate form C), then in accordance with step **(47)** instead of utilizing the specified given box, the corresponding box in the candidate form C (*vis-a-vis* the current candidate form), may be checked.
- Selection of candidate form (e.g. step **(46))** and/or verification/rejection box (e.g. in step **(47))** is done randomly or if desired by applying one or more optimizing criteria.
- In the case that lower level of confidence is tolerable (or for any other reason) it is not obligatory to store for each candidate a verification/rejection box *vis-a-vis* any other respective members in the list of candidates.
- According to the invention, it is not obligatory to test the verification\rejection boxes (or other property in the broader sense of the invention), but rather only number of candidates may be processed in order to classify the input form at a desired level of confidence utilizing to this end e.g. known *per se* statistical tests. The same applied to the number of boxes (in the case that there is more than one) that are processed *vis-a-vis* a given candidate.
- Those versed in the art will readily appreciate that the utilization of areas as a form property for determining fill-in likelihood (in connection with training and/or classification purposes) is only one out of many possible variants. Accordingly, other properties of the form may be utilized e.g. areas of given colors as compared to other areas, relationships between areas in the form, such as distances between sections of the form. The property or properties are not necessarily used for analyzing the likelihood that a s given area is a fill-in area, but rather other purposes may be tested in order to test invariability under use, e.g. to rank properties (areas) according to their likelihood of being foldable areas (such as area in the form that is folded when the form is sent in an envelope)

Numbers, alphabetic characters and Roman numerals that appear in the claims below are designated for convenience of understanding and do not necessarily imply any specific order of steps.

The present invention has been described with a certain degree of particularity, but those versed in the art will readily appreciate that various alterations and modifications may be carried out without departing from the scope of the following claims:

## Claims

1. A method for classifying an input form as corresponding to a candidate blank form from among a set of candidate blank forms, the method comprising the steps of:
**(a)** for each ordered couple taken in the set of candidate blank forms, form A and form B, finding at least one property which may distinguish between form A and form B by executing the steps of:
(i) comparing form A and form B so as to find at least one property in form A which is sufficiently distinguishable from a corresponding property in form B and which complies at least with a criterion that relates to the likelihood that the property is retained substantially invariable under use of the form A, said at least one property distinguishing between form A and form B constituting a verification property;
(ii) in the case where no property is found in step (i), comparing form A and form B so as to find at least one property in form A which is sufficiently distinguishable from a corresponding property in form B and which complies at least with a criterion that relates to the likelihood that the property is retained substantially invariable under use of the form B; said at least one property distinguishing between form A and form B constituting a rejection property;
**(b)** storing the verification property and/or the rejection property associated to form A, if any, which have been found in the preceding step **(a);**
**(c)** for each form of the set of candidate blank forms, repeating the sequence of following steps:
**(1)** retrieving the properties associated with that candidate blank form and stored in the preceding step (b),
**(2)** for each of the properties retrieved in the preceding step (1), repeating the following steps: (I) computing the respective property in the input form, (II) comparing the computed property with the retrieved property, (III) in the case that a verification property substantially mismatches a corresponding property in the input form, rejecting said candidate blank form, (IV) in the case that: a rejection property substantially matches a corresponding property in the input form, rejecting said candidate blank form;
**(3)** if said candidate blank form has not been rejected in the preceding step, classifying said input form as acorresponding to said candidate blank form.

2. The method of claim 1 being **characterized in that**
Step (i) comprises the steps of
- defining at least one box in the image of form B, each box constituting a sub-image in said form B image that corresponds to an area in form image, said at least one box consituting an at least one property,
- ranking the boxes so as to give rise to respective box rank scores, the likelihood that the area in the blank form B is a fill-in area being used as a first criterion for box ranking; high score reflecting better compliance with the criterion;
Said method being further **characterized in that**
Step (ii) comprises the steps of
- defining at least one box in the image of form A, each box constituting a sub-image in said form A image that corresponds to an area in form B image, said at least one box consituting an at least one property.
- ranking the boxes so as to give rise to respective box rank scores, the likelihood that the area in the blank form A is a fill-in area being used as one criterion for box ranking; high score reflecting better compliance with the criterion.

3. The method of claim 2, wherein said step for defining at least one box in the image of form B and said step for defining at least one box in the image of form A include: defining boxes such that the image is partitioned to substantially non-overlapping square or rectangular boxes.

4. The method of anyone of Claim 2 or 3, being **characterized in that** :
- with said first criterion, the likelihood that the area in the blank form A is a fill-in area is determined by calculating the white space in said box such that much white space in said form indicates higher likelihood that the area is a fill-in area;
Said method being **characterized in that**:
- in steps (i) and (ii), a second criterion consists in calculating the black space in the box; the rank score is determined such that the maximum space from among said white space and black space is calculated and the larger the calculated maximum space, the higher the rank score.

5. The method of anyone of claims 2 to 4, wherein the step (i) includes the following step for at least one box in one form A which is sufficiently distinguishable from a corresponding box in on other form if:
there is sufficient difference between the box and the corresponding box, and there is sufficient difference between box when slightly shifted in given directions and the corresponding box slightly shifted in said given directions.

6. The method of anyone of claims 2 to 4, wherein the step (ii) includes the following step for at least one box in one form A which is sufficiently distinguishable from a corresponding box in on other form if:
there is sufficient difference between the box and the corresponding box, and there is sufficient difference between box when slightly shifted in given directions and the corresponding box slightly shifted in said given directions.

7. The method of anyone of claims 2 to 6, wherein the condition to comply with high score in step (i) includes: said box has the best box rank score from among said box rank scores.

8. The method of anyone of claims 2 to 7, wherein the condition to comply with high score in step (ii) includes: said box has the best box rank score from among said box rank scores.

9. A system for classifying an input form as corresponding to being based on a candidate blank form from among a set of candidate blank forms, said system comprising a processor and associated memory capable of:
**(a)** for each ordered couple taken in the set of candidate blank forms, form A and form B, finding at least one property which may distinguish between form A and form B by executing the steps of:
(i) comparing form A and form B so as to find at least one property in form A which is sufficiently distinguishable from a corresponding property in form B and which complies at least with a criterion that relates to the likelihood that the property is retained substantially invariable under use of the form A, said at least one property distinguishing between form A and form B constituting a verification property;
(ii) in the case where no property is found in step (i), comparing form A and form B so as to find at least one property in form A which is sufficiently distinguishable from a corresponding property in form B and which complies at least with a criterion that relates to the likelihood that the property is retained substantially invariable under use of the form B; said at least one property distinguishing between form A and form B constituting a rejection property;
**(b)** storing the verification property and/or the rejection property associated to form A, if any, which have been found in the preceding step **(a);**
**(c)** for each form of the set of candidate blank forms, repeating the sequence of following steps:
**(1)** retrieving the properties associated with that blank form and stored in the preceding step (b),
**(2)** for each of the properties retrieved in the preceding step (1), repeating the following steps: (I) computing the respective property in the input form, (II) comparing the computed property with the retrieved property, (III) in the case that a verification property substantially mismatches a corresponding property in the input form, rejecting said candidate blank form, (IV) in the case that a rejection property substantially matches a corresponding property in the input form, rejecting said candidate blank form;
**(3)** if said candidate blank form has not been rejected in the preceding step, classifying said input form as acorresponding to said candidate blank form.

10. The system of claim 9 wherein said computer and associated memory being further capable of:
Including in Step (i) the steps of
- defining at least one box in the image of form B, each box constituting a sub-image in said form B image that corresponds to an area in form A image, said at least one box consituting an at least one property,
- ranking the boxes so as to give rise to respective box rank scores, the likelihood that the area in the blank form B is a fill-in area being used as a first criterion for box ranking; high score reflecting better compliance with the criterion;
And, including step (ii) the steps of
- defining at least one box in the image of form A, each box constituting a sub-image in said form A image that corresponds to an area in form B image, said at least one box consituting an at least one property.
- ranking the boxes so as to give rise to respective box rank scores, the likelihood that the area in the blank form A is a fill-in area being used as one criterion for box ranking; high score reflecting better compliance with the criterion.

## Patentansprüche

1. Verfahren zum Zuordnen eines eingegebenen Formulars zu einem entsprechenden potenziellen Blankoformular aus einer Gruppe von potenziellen Blankoformularen, wobei das Verfahren die folgenden Schritte umfasst:
(a) für jedes aus dem Formular A und dem Formular B bestehende geordnete Paar in der Gruppe der potenziellen Blankoformulare mindestens eine Eigenschaft ermitteln, anhand welcher das Formular A und das Formular B durch Ausführen der folgenden Schritte voneinander unterschieden werden können:
(i) Vergleichen des Formulars A mit dem Formular B zum Ermitteln mindestens einer Eigenschaft im Formular A, die sich in ausreichendem Maße von einer entsprechenden Eigenschaft im Formular B unterscheidet und mindestens ein Kriterium der Wahrscheinlichkeit erfüllt, dass diese Eigenschaft während der Verwendung des Formulars A im Wesentlichen unverändert bleibt, wobei diese mindestens eine Eigenschaft zur Unterscheidung zwischen Formular A und Formular B eine Zulassungseigenschaft darstellt;
(ii) falls in Schritt (i) keine Eigenschaft gefunden wird, Vergleichen des Formulars A mit dem Formular B, um im Formular A mindestens eine Eigenschaft zu finden, die sich in ausreichendem Maße von einer entsprechenden Eigenschaft im Formular B unterscheidet und mindestens ein Kriterium der Wahrscheinlichkeit erfüllt, dass die Eigenschaft während der Verwendung des Formulars B im Wesentlichen unveränderlich bleibt; wobei diese mindestens eine Eigenschaft zur Unterscheidung zwischen dem Formular A und dem Formular B eine Ausschlusseigenschaft darstellt;
(b) Speichern der möglicherweise im vorangehenden Schritt (a) gefundenen Zulassungseigenschaft und/oder der Ausschlusseigenschaft des Formulars A;
(c) für jedes Formular in der Gruppe der potenziellen Blankoformulare Wiederholen der folgenden Schritte:
(1) Abrufen der im vorangehenden Schritt (b) gespeicherten Eigenschaften des betreffenden potenziellen Blankoformulars,
(2) für jede der im vorangehenden Schritt (1) abgerufenen Eigenschaften Wiederholen der folgenden Schritte:
(I) Berechnen der entsprechenden Eigenschaft im eingegebenen Formular, (II) Vergleichen der berechneten Eigenschaft mit der abgerufenen Eigenschaft, (III) falls eine Zulassungseigenschaft im Wesentlichen von einer entsprechenden Eigenschaft im eingegebenen Formular abweicht, Ausschließen des potenziellen Blankoformulars, (IV) falls eine Ausschlusseigenschaft im Wesentlichen mit einer entsprechenden Eigenschaft im eingegebenen Formular übereinstimmt, Ausschließen des potenziellen Blankoformulars;
(3) wenn das potenzielle Blankoformular im vorangehenden Schritt nicht zurückgewiesen wurde, Zuordnen des eingegebenen Formulars zu dem betreffenden potenziellen Blankoformular.

2. Verfahren nach Anspruch 1, welches **dadurch gekennzeichnet ist, dass**
Schritt (i) die folgenden Schritte umfasst:
- Definieren mindestens eines Feldes im Bild des Formulars B, wobei jedes Feld ein Teilbild im Bild des Formulars B darstellt, welches einem Feld im Bild des Formulars A entspricht, und dieses mindestens eine Feld mindestens eine Eigenschaft darstellt.
- Ordnen der Rangfolge der Felder in der Weise, dass jedes Feld einen bestimmten Wert in der Werteskala erhält, wobei als Kriterium für die Rangfolge der Felder die Wahrscheinlichkeit dient, dass das Feld im Blankoformular B ein auszufüllendes Feld ist; wobei ein hoher Wert in der Werteskala eine bessere Übereinstimmung mit dem Kriterium bedeutet;
wobei das Verfahren ferner **dadurch gekennzeichnet ist, dass**
Schritt (ii) die folgenden Schritte umfasst:
- Definieren mindestens eines Feldes im Bild des Formulars A, wobei jedes Feld ein Teilbild im Bild des Formulars A darstellt, welches einem Feld im Bild des Formulars B entspricht, und dieses mindestens eine Feld mindestens eine Eigenschaft darstellt,
- Ordnen der Rangfolge der Felder in der Weise, dass jedes Feld einen bestimmten Wert in der Werteskala erhält, wobei als Kriterium für die Rangfolge der Felder die Wahrscheinlichkeit dient, dass das Feld im Blankoformular A ein auszufüllendes Feld ist; wobei ein hoher Wert in der Werteskala eine bessere Übereinstimmung mit dem Kriterium bedeutet.

3. Verfahren nach Anspruch 2, bei welchem der Schritt des Definierens mindestens eines Feldes im Bild des Formulars B und der Schritt des Definierens mindestens eines Feldes im Bild des Formulars A Folgendes beinhaltet: Definieren der Felder in der Weise, dass das Bild in quadratische oder rechteckige Felder aufgeteilt ist, die sich im Wesentlichen nicht überlappen.

4. Verfahren nach einem der Ansprüche 2 oder 3, **dadurch gekennzeichnet, dass**:
- bei dem ersten Kriterium die Wahrscheinlichkeit, dass das Feld im Blankoformular A ein auszufüllendes Feld ist, durch Berechnen der weißen Fläche in diesem Feld berechnet wird, wobei ein großer Anteil an weißer Fläche in diesem Formular eine höhere Wahrscheinlichkeit bedeutet, dass das Feld ein auszufüllendes Feld ist;
wobei das Verfahren **dadurch gekennzeichnet ist, dass**:
- in den Schritten (i) und (ii) ein zweites Kriterium im Berechnen der schwarzen Fläche in diesem Feld besteht, wobei die Rangfolge durch Berechnen des Maximums der weißen und schwarzen Flächen ermittelt wird und die Rangfolge umso höher ist, je größer das berechnete Flächenmaximum ist.

5. Verfahren nach einem der Ansprüche 2 bis 4, bei welchem der Schritt (i) den folgenden Schritt für mindestens ein Feld in einem Formular A beinhaltet, welches in ausreichendem Maße von einem entsprechenden Feld in einem anderen Formular unterschieden werden kann, wenn:
es zwischen dem Feld und dem betreffenden Feld sowie zwischen dem in bestimmte Richtungen leicht verschobenen Feld und dem in diese bestimmten Richtungen leicht verschobenen betreffenden Feld einen ausreichenden Unterschied gibt.

6. Verfahren nach einem der Ansprüche 2 bis 4, bei welchem der Schritt (ii) den folgenden Schritt für mindestens ein Feld in einem Formular A beinhaltet, welches sich in ausreichendem Maße von einem entsprechenden Feld in einem anderen Formular unterscheidet, wenn:
es zwischen dem Feld und dem betreffenden Feld sowie zwischen dem in bestimmte Richtungen leicht verschobenen Feld und dem in diese bestimmten Richtungen leicht verschobenen betreffenden Feld einen ausreichenden Unterschied gibt.

7. Verfahren nach einem der Ansprüche 2 bis 6, bei welchem die Bedingung für einen hohen Platz in der Rangordnung in Schritt (i) beinhaltet, dass dieses Feld den besten Platz aller Felder in der Rangordnung aufweist.

8. Verfahren nach einem der Ansprüche 2 bis 7, bei welchem die Bedingung für eine hohe Rangordnung in Schritt (ii) beinhaltet, dass dieses Feld den besten Platz aller Felder in der Rangordnung aufweist.

9. System zum Zuordnen eines eingegebenen Formulars zu einem potenziellen Blankoformular aus einer Gruppe von potenziellen Blankoformularen, wobei das System einen Prozessor und einen zugehörigen Speicher umfasst, die zu Folgendem in der Lage sind:
(a) Ermitteln mindestens einer Eigenschaft zur Unterscheidung zwischen dem Formular A und dem Formular B für jedes aus dem Formular A und dem Formular B bestehende geordnete Paar von potenziellen Blankoformularen, indem die folgenden Schritte ausgeführt werden:
(i) Vergleichen des Formulars A mit dem Formular B zum Ermitteln mindestens einer Eigenschaft im Formular A, die sich in ausreichendem Maße von einer entsprechenden Eigenschaft im Formular B unterscheidet und mindestens ein Kriterium der Wahrscheinlichkeit erfüllt, dass die Eigenschaft während der Verwendung des Formulars A im Wesentlichen unverändert bleibt, wobei die mindestens eine Eigenschaft zur Unterscheidung des Formulars A vom Formular B eine Zulassungseigenschaft darstellt;
(ii) falls in Schritt (i) keine Eigenschaft gefunden wird, Vergleichen des Formulars A mit dem Formular B, um im Formular A mindestens eine Eigenschaft zu finden, die sich in ausreichendem Maße von einer entsprechenden Eigenschaft im Formular B unterscheidet und mindestens ein Kriterium der Wahrscheinlichkeit erfüllt, dass die Eigenschaft während der Verwendung des Formulars B unverändert bleibt; wobei diese mindestens eine Eigenschaft zur Unterscheidung zwischen dem Formular A und dem Formular B eine Ausschlusseigenschaft darstellt;
(b) Speichern der möglicherweise im vorangehenden Schritt (a) gefundenen Zulassungseigenschaft und/oder der Ausschlusseigenschaft des Formulars A;
(c) für jedes Formular in der Gruppe der potenziellen Blankoformulare Wiederholen der folgenden Schritte:
(1) Abrufen der im vorangehenden Schritt (b) gespeicherten Eigenschaften des betreffenden potenziellen Blankoformulars,
(2) für jede der im vorangehenden Schritt (1) abgerufenen Eigenschaften Wiederholen der folgenden Schritte:
(I) Berechnen der entsprechenden Eigenschaft im eingegebenen Formular, (II) Vergleichen der berechneten Eigenschaft mit der abgerufenen Eigenschaft, (III) falls eine Zulassungseigenschaft im Wesentlichen von einer entsprechenden Eigenschaft im eingegebenen Formular abweicht, Ausschließen des potenziellen Blankoformulars, (IV) falls eine Ausschlusseigenschaft im Wesentlichen mit einer entsprechenden Eigenschaft im eingegebenen Formular übereinstimmt, Ausschließen des potenziellen Blankoformulars;
(3) wenn das potenzielle Blankoformular im vorangehenden Schritt nicht ausgeschlossen wurde, Zuordnen des eingegebenen Formulars zu dem betreffenden potenziellen Blankoformular.

10. Verfahren nach Anspruch 9, bei welchem der Computer und der zugehörige Speicher ferner in der Lage sind:
zusammen mit Schritt (i) die folgenden Schritte auszuführen:
- Definieren mindestens eines Feldes im Bild des Formulars B, wobei jedes Feld ein Teilbild im Bild des Formulars B darstellt, welches einem Feld im Bild des Formulars A entspricht, und dieses mindestens eine Feld mindestens eine Eigenschaft darstellt.
- Ordnen der Rangfolge der Felder in der Weise, dass jedes Feld einen bestimmten Wert in der Werteskala erhält, wobei als Kriterium für die Rangfolge der Felder die Wahrscheinlichkeit dient, dass das Feld im Blankoformular B ein auszufüllendes Feld ist; wobei ein hoher Wert in der Werteskala eine bessere Übereinstimmung mit dem Kriterium bedeutet;
und zusammen mit Schritt (ii) die folgenden Schritte auszuführen:
- Definieren mindestens eines Feldes im Bild des Formulars A, wobei jedes Feld ein Teilbild im Bild des Formulars A darstellt, welches einem Feld im Bild des Formulars B entspricht, und dieses mindestens eine Feld mindestens eine Eigenschaft darstellt.
- Ordnen der Rangfolge der Felder in der Weise, dass jedes Feld einen bestimmten Wert in der Werteskala erhält, wobei als Kriterium für die Rangfolge der Felder die Wahrscheinlichkeit dient, dass das Feld im Blankoformular A ein auszufüllendes Feld ist; wobei ein hoher Wert in der Werteskala eine bessere Übereinstimmung mit dem Kriterium bedeutet.

## Revendications

1. Un procédé pour classer un formulaire d'entrée, en tant que correspondant à un formulaire vierge candidat, parmi un jeu de formulaires vierges candidats, le procédé comprenant les étapes consistant à :
(a) pour chaque couple classé, pris dans le jeu de formulaires vierges candidats, le formulaire A et le formulaire B, trouver au moins une propriété qui puisse permettre de distinguer entre le formulaire A et le formulaire B, en exécutant les étapes consistant à :
(i) comparer le formulaire A et le formulaire B pour trouver dans le formulaire A au moins une propriété qui soit suffisamment discernable d'une propriété correspondante dans le formulaire B et qui satisfasse au moins à un critère concernant la probabilité selon laquelle la propriété soit considérée comme substantiellement invariable avec utilisation du formulaire A, ladite au moins une propriété, distinguant entre le formulaire A et le formulaire B, constituant une propriété de vérification ;
(ii) dans le cas dans lequel aucune propriété n'est trouvée à l'étape (i), comparer le formulaire A et le formulaire B pour trouver dans le formulaire A au moins une propriété qui soit suffisamment discernable d'une propriété correspondante dans le formulaire B et qui satisfasse au moins à un critère concernant la probabilité selon laquelle la propriété soit considérée comme sensiblement invariable avec utilisation du formulaire B ; ladite au moins une propriété, distinguant entre le formulaire A et le formulaire B, constituant une propriété de rejet ;
(b) stocker la propriété de vérification et/ou la propriété de rejet associée au formulaire A, s'il y a en une, ayant été trouvée à l'étape (a) précédente ;
(c) pour chaque formulaire du jeu de formulaires vierges candidats, répéter la séquence des étapes suivantes :
(1) récupérer les propriétés associées à ce formulaire vierge candidat et stockées à l'étape (b) précédente,
(2) pour chacune des propriétés récupérées à l'étape (1) précédente, répéter les étapes suivantes :
(I) calculer la propriété respective dans le formulaire d'entrée, (II) comparer la propriété calculée à la propriété récupérée, (III) dans le cas dans lequel une propriété de vérification est sensiblement en désaccord avec une propriété correspondante dans le formulaire d'entrée, rejeter ledit formulaire vierge candidat, (IV) dans le cas dans lequel une propriété de rejet coïncide sensiblement avec une propriété correspondante dans le formulaire d'entrée, rejeter ledit formulaire vierge candidat ;
(3) si ledit formulaire vierge candidat n'a pas été rejeté à l'étape précédente, classer ledit formulaire d'entrée en tant que correspondant audit formulaire vierge candidat.

2. Le procédé selon la revendication 1, **caractérisé en ce que**
l'étape (i) comprend les étapes consistant à :
- définir au moins une case dans l'image du formulaire B, chaque case constituant, dans ladite image du formulaire B, une sous-image qui correspond à une zone dans l'image du formulaire A, ladite au moins une case constituant au moins une propriété,
- classer les cases pour donner lieu à des résultats de classement de cases respectifs, la probabilité selon laquelle la zone, située dans le formulaire B vierge, est une zone à remplir étant utilisée comme premier critère pour le classement des cases ; le fait d'avoir un résultat numérique élevé reflétant une meilleure conformité au critère ;
ledit procédé étant en outre **caractérisé en ce que**
l'étape (ii) comprend les étapes consistant à :
- définir dans l'image du formulaire A au moins une case, chaque case constituant dans ladite image de formulaire A une sous-image correspond à une zone dans l'image du formulaire B, ladite au moins une case constituant au moins une propriété,
- classer les cases pour donner lieu à des résultats de classement de cases respectifs, la probabilité selon laquelle la zone située dans le formulaire A vierge soit une zone à remplir étant utilisée comme critère pour le classement des cases ; le fait d'avoir un résultat numérique élevé reflétant une meilleure conformité au critère.

3. Le procédé selon la revendication 2, dans lequel ladite étape de définition d'au moins une case dans l'image du formulaire B et ladite étape de définition d'au moins une case dans l'image du formulaire A comprennent : la définition de cases, de manière que l'image soit subdivisée en cases carrées ou rectangulaires, ne se chevauchant pratiquement pas.

4. Le procédé selon l'une quelconque des revendications 2 ou 3, **caractérisé en ce que** :
- avec ledit premier critère, la probabilité selon laquelle la zone se trouvant dans le formulaire A vierge est une zone à remplir est déterminée par calcul de l'espace en blanc situé dans ladite case, de manière que beaucoup d'espace en blanc dans ledit formulaire indique une plus haute probabilité que la zone soit une zone à remplir ;
ledit procédé étant **caractérisé en ce que** :
- aux étapes (i) et (ii), un deuxième critère consiste à calculer l'espace en noir dans la case, le résultat de classement est déterminé de manière que l'espace minimal parmi ledit espace en blanc et ledit espace en noir soit calculé et que plus l'espace maximal calculé est grand, plus le résultat de classement est élevé.

5. Le procédé selon l'une quelconque des revendications 2 à 4, dans lequel l'étape (i) comprend l'étape suivante pour au moins une case, dans un formulaire A, qui soit suffisamment discernable d'une case correspondante, dans un autre formulaire, si :
il y a une différence suffisante entre la case et la case correspondante, et il y a une différence suffisante entre la case, lorsqu'elle est légèrement décalée dans des directions données, et la case correspondante, lorsqu'elle légèrement décalée dans lesdites directions données.

6. Le procédé selon l'une quelconque des revendications 2 à 4, dans lequel l'étape (ii) comprend l'étape suivante, pour au moins une case, dans un formulaire A, qui est suffisamment discernable d'une case correspondante, dans un autre formulaire, si :
Il y a une différence suffisante entre la case et la case correspondante, et il y a une différence suffisante entre la case, lorsqu'elle est légèrement décalée dans des directions données, et la case correspondante, lorsqu'elle légèrement décalée dans lesdites directions données.

7. Le procédé selon l'une quelconque des revendications 2 à 6, dans lequel la condition à satisfaire avec un résultat élevé à l'étape (i) inclut : ladite case présente le meilleur résultat de classement de cases parmi lesdits résultats de classement de cases.

8. Le procédé selon l'une quelconque des revendications 2 à 7, dans lequel la condition à satisfaire avec un résultat élevé à l'étape (ii) comprend le fait que : ladite case présente le meilleur résultat de classement de cases parmi lesdits résultats de classement de cases.

9. Un système pour classer un formulaire d'entrée, en tant que correspondant à un formulaire vierge candidat, parmi un jeu de formulaires vierges candidats, ledit système comprenant un processeur et une mémoire associée, capable de :
(a) pour chaque couple classé, pris dans le jeu de formulaires vierges candidats, le formulaire A et le formulaire B, trouver au moins une propriété qui permette de discerner entre le formulaire A et le formulaire B, en exécutant les étapes consistant à :
(i) comparer le formulaire A et le formulaire B pour trouver dans le formulaire A au moins une propriété qui soit suffisamment discernable d'une propriété correspondante dans le formulaire B et qui satisfasse au moins à un critère concernant la probabilité selon laquelle la propriété soit considérée comme sensiblement invariable avec utilisation du formulaire A, ladite au moins une propriété, discernant entre le formulaire A et le formulaire B, constituant une propriété de vérification ;
(ii) dans le cas dans lequel aucune propriété n'est trouvée à l'étape (i), comparer le formulaire A et le formulaire B pour trouver dans le formulaire A au moins une propriété, qui soit suffisamment discernable d'une propriété correspondante dans le formulaire B et qui satisfasse au moins à un critère liant la probabilité selon laquelle la propriété est considérée comme sensiblement invariable avec utilisation du formulaire B ; ladite au moins une propriété, discernant entre le formulaire A et le formulaire B, constituant une propriété de rejet ;
(b) stocker la propriété de vérification et/ou de la propriété de rejet associée au formulaire A, s'il y a en une, ayant été trouvée à l'étape (a) précédente ;
(c) pour chaque formulaire du jeu de formulaires vierges candidats, répéter la séquence des étapes suivantes :
(1) récupération des propriétés associées à ce formulaire vierge et stockées à l'étape (b) précédente,
(2) pour chacune des propriétés récupérées à l'étape (1) précédente, répéter les étapes suivantes :
(I) calculer la propriété respective dans le formulaire d'entrée, (II) comparer la propriété calculée à la propriété récupérée, (III) dans le cas dans lequel une propriété de vérification est sensiblement en désaccord avec une propriété correspondante dans le formulaire d'entrée, rejeter ledit formulaire vierge candidat, (IV) dans le cas dans lequel une propriété de rejet coïncide sensiblement avec une propriété correspondante dans le formulaire d'entrée, rejeter ledit formulaire vierge candidat ;
(3) si ledit formulaire vierge candidat n'a pas été rejeté à l'étape précédente, classer ledit formulaire d'entrée en tant que correspondant audit formulaire vierge candidat.

10. Le système selon la revendication 9, dans lequel ledit ordinateur et ladite mémoire associée sont en outre capables de :
inclure, à l'étape (i), les étapes consistant à
- définir au moins une case dans l'image du formulaire B, chaque case constituant, dans ladite image du formulaire B, une sous-image qui correspond à une zone dans l'image du formulaire A, ladite au moins une case constituant au moins une propriété,
- classer les cases pour donner lieu à des résultats de classement de cases respectifs, la probabilité selon laquelle la zone, située dans le formulaire B vierge, est une zone à remplir étant utilisée comme premier critère pour le classement des cases ; le fait d'avoir un résultat numérique élevé reflétant une meilleure conformité au critère ;
et l'étape (ii) comprenant les étapes consistant à :
- définir dans l'image du formulaire A au moins une case, chaque case constituant dans ladite image de formulaire A une sous-image correspond à une zone dans l'image du formulaire B, ladite au moins une case constituant au moins une propriété,
- classer les cases pour donner lieu à des résultats de classement de cases respectifs, la probabilité selon laquelle la zone située dans le formulaire A vierge soit une zone à remplir étant utilisée comme critère pour le classement des cases ; le fait d'avoir un résultat numérique élevé reflétant une meilleure conformité au critère.
